# EUROPEAN PATENT SPECIFICATION

(11) **EP 2 336 908 B1**
(45) Date of publication and mention of the grant of the patent: **29.01.2014**
(21) Application number: 09809769.4
(22) Date of filing: 11.08.2009
(51) Int. Cl.: G06F 21/62, G06F 17/30

(54) **SEARCH DEVICE, SEARCH METHOD AND SEARCH PROGRAM USING OPEN SEARCH ENGINE**
SUCHVORRICHTUNG, SUCHVERFAHREN UND SUCHPROGRAMM UNTER VERWENDUNG EINER OFFENEN SUCHMASCHINE
DISPOSITIF DE RECHERCHE, PROCÉDÉ DE RECHERCHE ET PROGRAMME DE RECHERCHE UTILISANT UN MOTEUR DE RECHERCHE OUVERTE

(30) Priority: 26.08.2008 JP 2008216821
(43) Date of publication of application: 22.06.2011
(73) Proprietor: International Business Machines Corporation, Armonk, NY 10504 (US)
(72) Inventor: KAWANAKA Shinya, Winchester Hampshire SO21 2JN (GB); MATSUMOTO Yoshitaka, Yamato-shi Kanagawa 242-8502 (JP); MASUNO Naruaki, Yamato-shi Kanagawa 242-8502 (JP); HAMANO Yasuo, Yamato-shi Kanagawa 242-8502 (JP)
(74) Representative: Roberts, Scott Anthony
(86) International application number: PCT/JP2009/064184
(87) International publication number: WO 2010/024116

(56) References cited:
- EP-A2- 1 251 436
- JP-A- 8 320 873
- JP-A- 2002 132 813
- JP-A- 2002 278 970
- JP-A- 2002 312 377
- JP-A- 2002 351 908
- JP-A- 2004 021 654
- US-A1- 2002 103 806
- US-A1- 2008 005 264
- YASUSHI OGAWA ET AL.: 'N-gram Sakuin ni Okeru Fukugo Kensaku Joken no Koritsuteki na Shori Hoho, No.SIG5 (TOD 2)' TRANSACTIONS OF INFORMATION PROCESSING SOCIETY OF JAPAN vol. 40, no. SIG5, 15 May 1999, pages 43 - 53, XP008138457

## Description

### Field of the Invention

The present invention relates to search technology and more specifically to a search apparatus, search method and search program using a public search engine.

### Background of the Invention

At present, a variety of public search engines are available on the Internet, and can be accessed by anyone. However, when a search is conducted using search terms (i.e. keywords and the like) there is a risk that the search terms are made available to the public. This is of particular concern if the set of search terms, or a concept or idea encapsulated by a set of search terms, is confidential or secret. For example, inventors conducting novelty searches for inventions to assess the likelihood of patent protection may search public search engines for features indicating the invention. The keywords used may disclose the features of the invention and may constitute disclosure to the public. In such a scenario, the invention constitutes secret information and the search terms must not disclose the secret information. Other similar secret information that may be used to conduct searches of public search engines include information on new product developments, technical know-how, and personal information.

Japanese Patent Application Publication No. Hei 11-259512 (Patent Document 1) discloses a data search system in which a data search apparatus performs a search after concealing or obscuring from the data search apparatus all of or a part of a search condition input to the data search apparatus, and then refines a result of the search. In order to conceal or obscure the search condition, this system deletes, from all the input search conditions, previously registered search conditions that should be concealed, replaces the input search conditions with synonyms or hypernyms thereof, adds an unnecessary search condition to the inputted search conditions, or divides each of the inputted search conditions into several search terms.

However, because this system changes search conditions in the above-described manner, it suffers the drawback of identifying very few relevant search results or, on the other hand, aquiring an enormous amount of irrelevant search results.

Japanese Patent Application Publication No. 2002-297606 (Patent Document 2) discloses a database access system which allows a user to use an information providing service while treating a search condition that the user wants to conceal as confidential. A client computer transmits to a server computer an encrypted query obtained by encrypting confidential data items that are included in search conditions. While encrypting searched data in the same manner as the confidential data items are encrypted, the server computer performs a data search by encrypted data matching without decrypting the encrypted search conditions.

This approach uses encryption to conceal only how search conditions are combined (AND, OR, NOT, etc). Further, the processing load associated with the encryption and the data matching is undesirably high.

Other than those mentioned above, there have been proposed the following search methods.

### "Private Information Retrieval (PIR)":

There has been a problem that, while a server retains data of N bits, a client acquires 1 bit out of the N bits without informing the server. A simple solution to this problem is that the server should transmit all of the N bits to the client. Since 1990's, however, there have already been study results indicating that, on the assumption of existence of multiple servers and computational complexity, the problem can be solved without needing transmission of all of the bits. These are mathematical basic theories and have not yet been put to practical use. (Refer to http://www.cs.umd.edu/-gasarch/papers/pirsurvey.pdf (Non-patent Document 1).)

### "Oblivious Transfer (OT)":

Whereas PIR may allow a client to acquire information other than information wanted by the client, OT allows a client not only to make settings for achieving the search method based on PIR, but also to design a protocol for allowing the client to only acquire data wanted by the client, excluding information other than the wanted data. Additionally, in the case of OT, there is no limit to volumes of communication. OT is the same as Symmetric PIR described in Non-patent Document 1. OT is also a theory, and there have been almost no examples of actual implementation thereof.

### "New techniques for private stream searching":

In this method, a query is encrypted on a server side by use of a public key of a user, and an index is encrypted at the same time. Thereby, the user can acquire a search result without making information known to the server. However, because this method needs to be implemented on the server side, users cannot utilize search servers generally used in public. (Refer to http://acsc.csl.sri.com/privss/ (Non-patent Document 2).)

Thus it would be advantageous to provide a mechanism for efficiently searching an existing public search to acquiring required information without allowing secret information forming the basis of the search to be inferred.

### Summary of the Invention

In a first aspect the present invention accordingly provides: a search apparatus connecting a public search engine, comprising: search-word input means for receiving input of a desired search word consisting of three or more characters; valid-character-string generation means for extracting two or more arbitrary consecutive characters from the search word and generating a plurality of valid character strings each consisting of the thus extracted characters; noise-word selection means for selecting an arbitrary word from a dictionary of words as a noise word; noise-character-string generation means for extracting two or more arbitrary consecutive characters from the noise word and generating a noise character string consisting of the thus extracted characters; query generation means for generating a query including the valid character strings and the noise character strings; external search means for transmitting the query to the public search engine; internal search means for performing a second search over a search result transmitted by the public search engine in reply to the query, the second search using the search word so as to generate a search result for the search word.

Preferably, the search apparatus further comprises: search-result display means for displaying a result of the search performed by the internal search means.

Preferably, the search apparatus connects to a terminal and further comprises: search-result output means for sending a result of the search performed by the internal search means to the terminal, wherein the search-word input means for receiving input of a desired search word consisting of three or more characters from the terminal.

Preferably, the search apparatus further comprises: general-word search means for transmittingpredetermined general words as queries to the public search engine; and dictionary generation means for generating the dictionary by extracting words from search results transmitted back from the public search engine in reply to the queries transmitted from the general-word search means.

Preferably the number of valid character strings to be generated by the valid-character-string generation means is increased according to an increase of the number of characters in the search word inputted to the search-word input means.

Preferably the noise-character-string generation means generates the noise character strings until the number of the noise character strings exceeds a predetermined threshold value.

Preferably the noise-character-string generation means selects the noise words until the number of the noise words exceeds a predetermined threshold value.

In a second aspect the present invention accordingly provides: a search method using a public search engine, the method comprising the steps of: receiving input of a desired search word consisting of three or more characters; extracting two or more arbitrary consecutive characters from the search word and generating a plurality of valid character strings each consisting of the thus extracted characters; selecting an arbitrary word from a dictionary of words as a noise word; noise-character-string generation means for extracting two or more arbitrary consecutive characters from the noise word and generating a noise character string consisting of the thus extracted characters; generating a query including the valid character strings and the noise character strings; transmitting the query to the public search engine; performing a second search over a search result transmitted by the public search engine in reply to the query, the second search using the search word so as to generate a search result for the search word.

Preferably, the search method further comprises the steps of: transmitting predetermined general words as queries to the public search engine; and generating the dictionary by extracting words from search results transmitted back from the public search engine in reply to the transmitted queries.

Preferably the number of valid character strings to be generated is increased according to an increase of the number of characters in the search word.

Preferably, the noise character strings are generated until a number of noise character strings exceeds a predetermined threshold value.

Preferably the noise words are selected until the number of the noise words exceeds a predetermined threshold value.

In a third aspect, the present invention accordingly provides a computer program element comprising computer program code to, when loaded into a computer system and executed thereon, cause the computer to perform the steps of the method described above.

### Brief Description of the Drawings

Preferred embodiments of the present invention will now be described, by way of example only, with reference to the following drawings in which:
Fig. 1 is a functional block diagram showing a configuration of a search apparatus according to an embodiment of the present invention;
Fig. 2 is a flowchart showing a search program inside the search apparatus shown in Fig. 1;
Fig. 3 is a diagram for explaining operations of the search apparatus shown in Fig. 1; and
Fig. 4 is a flowchart showing a subroutine for query generation shown in Fig. 2.

### Detailed Description of the Preferred Embodiments

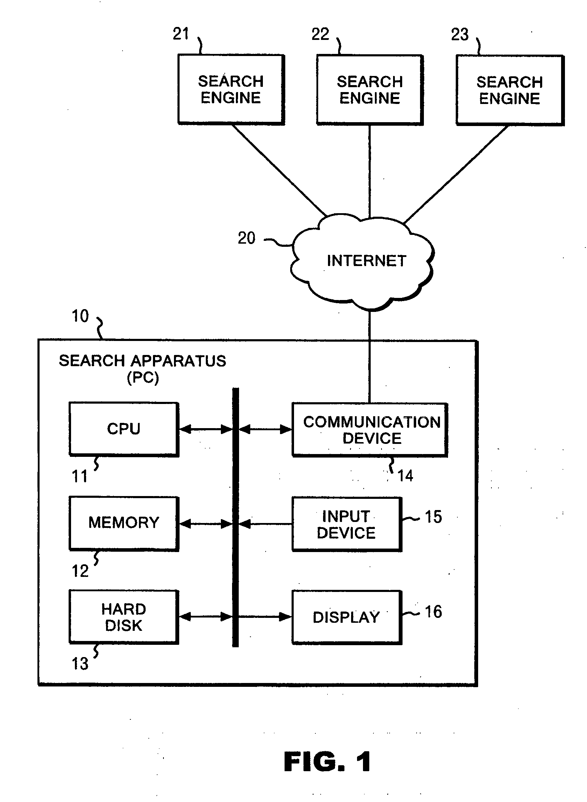

Referring to Fig. 1, a search apparatus 10 according to the embodiment of the present invention includes a CPU (central processing unit) 11, a memory 12, a hard disk 13, a communication device 14, an input device 15, and a display 16. The communication device 14 connects the search apparatus 10 to the Internet 20, transmits various requests to search engines 21 to 23, and receives various replies from the search engines 21 to 23. The input device 15 corresponds to a keyboard, a mouse and so on. The search apparatus 10 is constructed by installing a later-described search program on a personal computer (PC). The search program is provided by being set in a storage medium such as a CD-ROM, or by being downloaded from a server via the Internet 20. The search apparatus 10 can be connected to a terminal through a computer network as well as search engines 21 to 23.

Various businesses construct the search engines 21 to 23 on WWW (World Wide Web) servers connected to the Internet 20 to provide website search services to the public for free or for a fee. The search engines 21 to 23 transmit search results back in reply to search requests (queries) form an unspecified number of clients connected to the Internet 20. As one of these clients, the search apparatus 10 also performs searches by using the search engines 21 to 23 being public as described above. Each of the search engines 21 to 23 used here adopts an N-gram method.

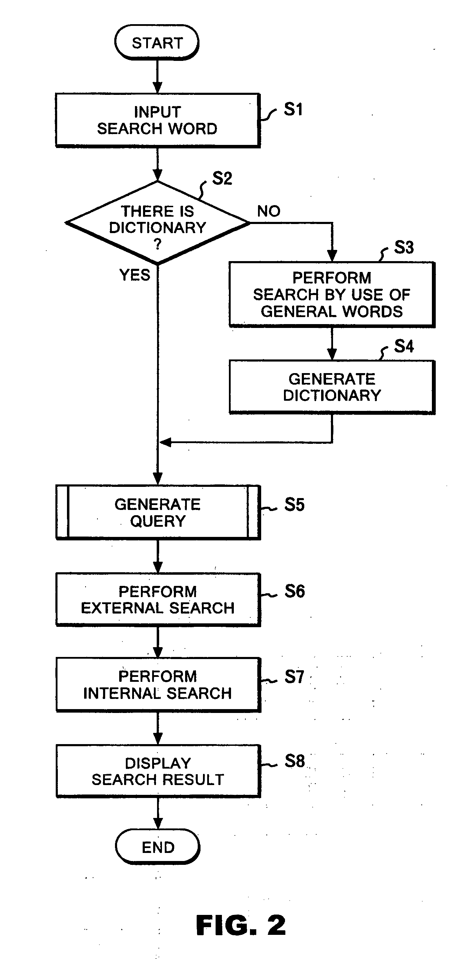

Operations of the search apparatus 10 will be described below. The CPU 11 executes the search program shown in Fig. 2.

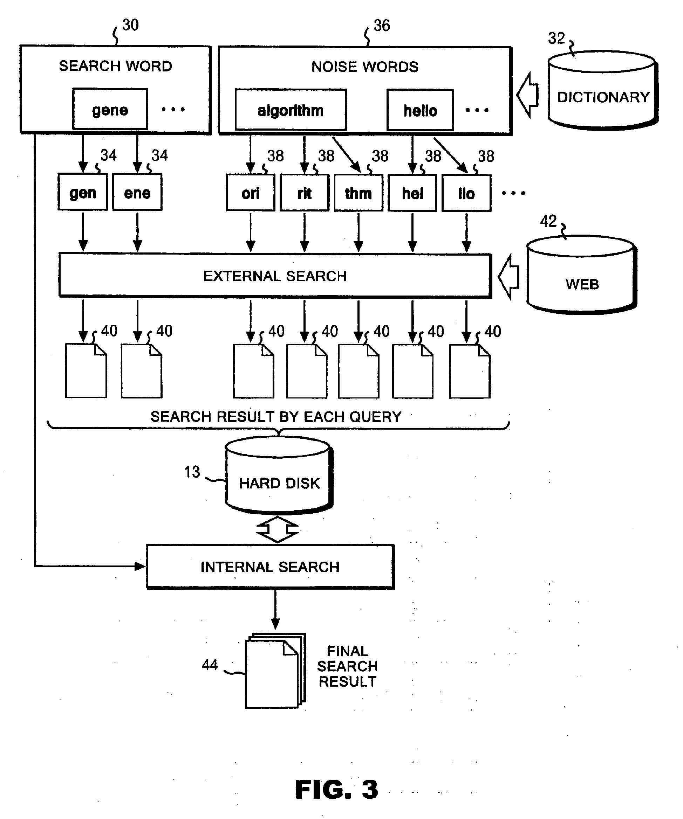

Referring to Figs. 2 and 3, the search apparatus 10 receives input of a desired search word (S1). Specifically, by operating the input device 15, a user inputs one or more search words 30 on a screen displayed on the display 16, the search words 30 being related to information which the user tries to find. Each search word 30 consists of three or more characters. In an example shown in Fig. 3, "gene" is inputted as the search word 30.

Once the user selects out of the search engines 21 to 23 a desired search engine used for a search (hereinafter, description will be given by citing a case where the search engine 21 is selected), the search apparatus 10 judges whether a dictionary 32 exclusive to the selected search engine 21 has been already generated or not (S2).

When the dictionary 32 has not been generated yet (NO in S2), the search apparatus 10 transmits general words as queries to the search engine 21 (S3). As general words, about 10 words such as "have" and "get" are previously set up. These words are transmitted as queries one by one to the search engine 21.

Subsequently, the search apparatus 10 generates the dictionary 32 exclusive to the search engine 21 by extracting words from search results returned from the search engine 21 in reply to the queries (S4). In a case where 10 words are respectively set as the queries, 10 search results are transmitted back from the search engine 21. Each of the search results contains data (for example, a URL (uniform resource locator) of a Web page, a title, and a part of a main text) necessary to specify one or more Web pages searched out. Because the words transmitted as the queries are general words, the search results contain almost all of Web pages having been accumulated as indices in the search engine 21. Therefore, the dictionary 32 can be described as a collection of words of Web pages searchable by the search engine 21. Incidentally, when another search result is acquired from the search engine 21, the dictionary 32 can be updated by being added with new words contained in the result.

Subsequently, based on the search words 30 inputted in Step S1, and also based on words in the dictionary 32 generated in Step S4, the search apparatus 10 generates one or more queries which should be transmitted to the search engine 21 (S5).

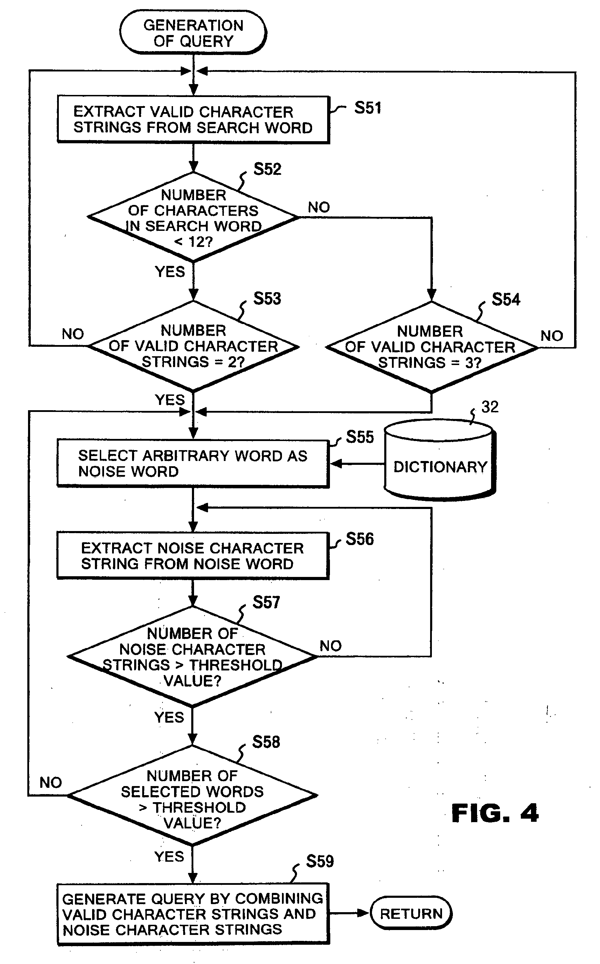

Specifically, referring to Fig. 4, the search apparatus 10 generates each of multiple valid character strings 34 by extracting two or more arbitrary consecutive characters in each of the search words 30 inputted in Step S1 (S51) . Each of the valid character strings 34 consists of the two or more characters thus extracted. If the number of characters in the search word 30 is less than 12 (YES in S52), Steps S51 and S52 are repeated until two valid character strings 34 are generated (NO in S53). On the other hand, if the number of characters in the search word 30 is not less than 12 (NO in S52), Steps S51 and S52 are repeated to generate three valid character strings 34 (NO in S54).

In the example shown in Fig. 3, the valid character stings "gen" and "ene" are extracted from the search word "gene." Each of the valid character strings 34 consists of 3 characters. If the number of characters in each of the valid character strings 34 is increased, secrecy of the search words 30 becomes lower although search accuracy becomes higher. Additionally, if the number of the valid character strings 34 is increased, secrecy of the search words 30 becomes lower although search accuracy becomes higher.

Incidentally, in a case where the multiple search words 30 are inputted, the multiple valid character strings 34 are generated so that the valid character strings 34 can include characters from preferably all of the search words. Here, the maximum possible number of the valid character strings 34 supposed to be generated is previously determined. When the number of the search words 30 is large, the valid character strings 34 are generated so as not to exceed the maximum possible number.

Additionally, the search apparatus 10 selects one or more arbitrary words as noise words 36 from the dictionary 32 (S55). Subsequently, the search apparatus 10 generates two or more arbitrary consecutive characters from each of the noise words 36, to thereby generate one or more noise character strings 38 (S56). Each of the noise character strings 38 consists of the two or more characters thus extracted. Step S56 is repeated until the number of the generated noise character strings 38 exceeds a predetermined threshold value (which is, for example, twice as large as the number of the valid character strings 34) (NO in S57). Additionally, Steps S55 to S57 are repeated until the number of words selected as the noise words 36 exceeds a predetermined threshold value (which is, for example, three times as large as the number of the search words 30) (NO in S58).

In the example shown in Fig. 3, the noise character stings "ori," "rit" and "thm" are extracted from the noise word "algorithm," and the noise character stings "hel," and "llo" are extracted from the noise word "hello." Each of the noise character strings 38 consists of 3 characters, as in the case of the valid character strings 34.

Incidentally, although it is preferable that a word different from the search word 30 be selected as the noise word 36, a word which is the same as the search word 30 may be selected as the noise word 36. The noise word 36 can be one or more words.

If the number of the noise character strings 38 has exceeded the predetermined threshold value, and also if the number of the selected words has exceeded the predetermined threshold value (YES in S57 and YES in S58), the search apparatus 10 generates one or more queries by combining the valid character strings 34 generated in Step S51 and the noise character strings 38 generated in Step S56 (S59). Although it is preferable that each of the queries be constructed by logical multiplication (AND) of the valid character strings 34 and the noise character strings 38, each of the queries may also be constructed by logical addition (OR), negation (NOT), or combination of these.

Referring to Fig. 2 again, the search apparatus 10 transmits the queries generated in Step S5 to the search engine 21 (S6). The search engine 21 transmits search results 40 back to the search apparatus 10 in reply to the respective queries. The search apparatus 21 previously generates indices (unillustrated) by indexing a large number of Webs 42 on the Internet 20 by using the N gram method. The search results 40 are generated based on these indices.

Subsequently, the search apparatus 10 performs a second search over the search results 40 transmitted back from the search engine 21 in reply to the respective queries, and thereby generates a final search result 44 (S7). Because all of the search results 40 transmitted back from the search engine 21 are temporarily saved in the hard disk 13 inside the search apparatus 10, the second search is executed completely locally. Specifically, irrelevant Web pages, which would not be searched out if the main query is otherwise transmitted as it is, are excluded from the search results by having the search results 40 filtered by using the search words 30. Thereafter, the search apparatus 10 integrates multiple search results obtained by thus excluding the irrelevant Web pages.

Finally, the search apparatus 10 displays the final search result 44 generated in Step S7 on the display 16. If the user looks at the final search result 44 and judges it to be inadequate, steps from Step 59 may be executed again after combinations of the valid character strings 34 and the noise character strings 38 are changed.

As described above, according to the embodiment of the present invention, queries are transmitted to the search engine 21 after having been generated as combinations of the valid character strings 34 extracted from the search word 30, and the noise character strings 38 extracted from the noise word 36. Accordingly, necessary information can be efficiently acquired without allowing secret information to be inferred based on the search words 30. To be more specific, a large number of the valid character strings 34 and a large number of the noise character strings 38 are included in the queries, whereby combinatorial explosion occurs even if restoration of the search words 30 is tried on the search engine 21 side by combining the valid character strings 34 and the noise character strings 39. Accordingly, it becomes a significant challenge that is extremely difficult to address to infer the search words 30. With sufficient number of valid character strings 34 and noise character stings 38, it can be impossible to infer the search words 30.

Additionally, the dictionary 32 appropriate to the search engine 21 is generated. Consequently, the number of hits resulting from a search by the noise word 36 becomes larger than would be typical, and the security of the search words 35 increases. Additionally, the number of valid character strings 34 to be generated is increased according to an increase of the number of characters in the search word 35. Specifically, two valid character strings 34 are generated if the number of characters in the search word 35 is less than 12; three valid character strings 34 are generated if the number of characters in the search word 35 is not less than 12. Thereby, search accuracy becomes higher although secrecy of the search word 35 becomes lower. Moreover, the noise character strings 38 are generated until the number thereof exceeds a predetermined threshold value, whereby secrecy of the search word 35 becomes lower although search accuracy becomes lower. Furthermore, the noise words 36 are selected until the number thereof exceeds a predetermined threshold value, whereby secrecy of the search word 35 becomes higher although search accuracy becomes lower.

In the above embodiment, if the number of characters in the search word 35 is less than 12, two valid character strings 34 are generated, and, if the number of characters in the search word 35 is not less than 12, three valid character strings 34 are generated. However, the number of characters in the search word 35 which is set as a threshold value is not particularly limited, and the number of the generated valid character strings 34 is not particularly limited, either. Additionally, the number of the generated valid character strings 34 is not limited to being changed at one stage, and the number thereof may also be changed at multiple stages. In summary, it is preferable that the number of valid character strings 34 to be generated be increased according to an increase of the number of characters in the search word 35.

Additionally, although the dictionary 32 appropriate to the search engine 21 is used in the above embodiment, a general dictionary previously prepared may be used instead. In this case, processing for generation of the dictionary 32 becomes unnecessary although secrecy of the search words 35 becomes lower.

Although the embodiment of the present invention has been described hereinabove, the above described embodiment is merely exemplification for carrying out the present invention. Therefore, the present invention is not limited to the above described embodiment, and can be carried out by appropriately changing the above described embodiment.

## Claims

1. A search apparatus connecting a public search engine, comprising:
search-word input means for receiving input of a desired search word consisting of three or more characters;
valid-character-string generation means for extracting two or more arbitrary consecutive characters from the search word and generating a plurality of valid character strings each consisting of the thus extracted characters;
noise-word selection means for selecting an arbitrary word from a dictionary of words as a noise word;
noise-character-string generation means for extracting two or more arbitrary consecutive characters from the noise word and generating a noise character string consisting of the thus extracted characters;
query generation means for generating a query including the valid character strings and the noise character strings;
external search means for transmitting the query to the public search engine;
internal search means for performing a second search over a search result transmitted by the public search engine in reply to the query, the second search using the search word so as to generate a search result for the search word.

2. The search apparatus according to claim 1, further comprising:
search-result display means for displaying a result of the search performed by the internal search means.

3. The search apparatus according to claim 1 connecting to a terminal, further comprising:
search-result output means for sending a result of the search performed by the internal search means to the terminal, wherein the search-word input means for receiving input of a desired search word consisting of three or more characters from the terminal.

4. The search apparatus according to claim 1, further comprising:
general-word search means for transmitting predetermined general words as queries to the public search engine; and
dictionary generation means for generating the dictionary by extracting words from search results transmitted back from the public search engine in reply to the queries transmitted from the general-word search means.

5. The search apparatus according to claim 1, wherein the number of valid character strings to be generated by the valid-character-string generation means is increased according to an increase of the number of characters in the search word inputted to the search-word input means.

6. The search apparatus according to claim 1, wherein the noise-character-string generation means generates the noise character strings until the number of the noise character strings exceeds a predetermined threshold value.

7. The search apparatus according to claim 1, wherein the noise-character-string generation means selects the noise words until the number of the noise words exceeds a predetermined threshold value.

8. A search method using a public search engine, the method comprising the steps of:
receiving input of a desired search word consisting of three or more characters;
extracting two or more arbitrary consecutive characters from the search word and generating a plurality of valid character strings each consisting of the thus extracted characters;
selecting an arbitrary word from a dictionary of words as a noise word;
noise-character-string generation means for extracting two or more arbitrary consecutive characters from the noise word and generating a noise character string consisting of the thus extracted characters;
generating a query including the valid character strings and the noise character strings;
transmitting the query to the public search engine;
performing a second search over a search result transmitted by the public search engine in reply to the query, the second search using the search word so as to generate a search result for the search word.

9. The search method according to claim 8, further comprising the steps of:
transmitting predetermined general words as queries to the public search engine; and
generating the dictionary by extracting words from search results transmitted back from the public search engine in reply to the transmitted queries.

10. The method according to claim 8, wherein the number of valid character strings to be generated is increased according to an increase of the number of characters in the search word.

11. The method according to claim 8, wherein the noise character strings are generated until a number of noise character strings exceeds a predetermined threshold value.

12. The method according to claim 9, wherein the noise words are selected until the number of the noise words exceeds a predetermined threshold value.

13. A computer program element comprising computer program code to, when loaded into a computer system and executed thereon, cause the computer to perform the steps of a method as claimed in any of claims 8 to 12.

## Patentansprüche

1. Suchvorrichtung, die mit einer öffentlichen Suchmaschine verbunden ist und umfasst:
ein Suchwort-Eingabemittel zum Empfangen der Eingabe eines gewünschten Suchworts, das aus drei oder mehr Zeichen besteht;
ein Erzeugungsmittel von gültigen Zeichen-Strings zum Entnehmen von zwei oder mehr beliebigen aufeinanderfolgenden Zeichen aus dem Suchwort und Erzeugen einer Vielzahl von gültigen Zeichen-Strings, die jeweils aus den entnommenen Zeichen bestehen;
ein Rauschwort-Auswahlmittel zum Auswählen eines beliebigen Worts als ein Rauschwort aus einem Wörterbuch;
ein Rauschzeichen-String-Erzeugungsmittel zum Entnehmen von zwei oder mehr beliebigen aufeinanderfolgenden Zeichen aus dem Rauschwort und Erzeugen eines Rauschzeichen-Strings, der aus den entnommenen Buchstaben gebildet wird;
ein Abfrage-Erzeugungsmittel zum Erzeugen einer Abfrage, die die gültigen Zeichen-Strings und die Rauschzeichen-Strings beinhaltet;
ein externes Suchmittel zum Übertragen der Abfrage an die öffentliche Suchmaschine;
ein internes Suchmittel zum Durchführen einer zweiten Suche über ein Suchergebnis, das von der öffentlichen Suchmaschine als Antwort auf die Abfrage übertragen wurde, wobei die zweite Suche das Suchwort zum Erzeugen eines Suchergebnisses für das Suchwort verwendet.

2. Suchvorrichtung nach Anspruch 1, die ferner umfasst:
ein Suchergebnis-Anzeigemittel zum Anzeigen eines Ergebnisses der Suche, die von dem internen Suchmittel durchgeführt wurde.

3. Suchvorrichtung nach Anspruch 1, die mit einem Terminal verbunden ist und ferner umfasst:
ein Suchergebnis-Ausgabemittel zum Senden eines Ergebnisses der von dem internen Suchmittel ausgeführten Suche an das Terminal, worin sich das Suchwort-Eingabemittel zum Empfangen der Eingabe eines gewünschten Suchworts gebildet aus drei oder mehr Zeichen von dem Terminal befindet.

4. Suchvorrichtung nach Anspruch 1, die ferner umfasst:
ein Allgemeinwort-Suchmittel zum Übertragen von vorgegebenen Allgemeinwörter als Abfragen an die öffentliche Suchmaschine; und
ein Wörterbuch-Erzeugungsmittel zum Erzeugen des Wörterbuchs durch Entnehmen von Wörtern aus Suchergebnissen, die von der öffentlichen Suchmaschine als Antwort auf die von den Allgemeinwort-Suchmitteln übertragenen Abfragen zurückgegeben wurden.

5. Suchvorrichtung nach Anspruch 1, wobei die Anzahl gültiger Zeichen-Strings, die von dem Erzeugungsmittel von gültigen Zeichen-Strings erzeugt werden, gemäß einer Zunahme der Zeichenanzahl in dem Suchwort erhöht wird, das in das Suchwort-Eingabemittel eingegeben wird.

6. Suchvorrichtung nach Anspruch 1, wobei das Rauschzeichen-String-Erzeugungsmittel die Rauschzeichen-Strings erzeugt, bis die Anzahl der Störzeichen-Strings einen vorgegebenen Schwellenwert übersteigt.

7. Suchvorrichtung nach Anspruch 1, wobei das Rauschzeichen-String-Erzeugungsmittel die Rauschwörter auswählt, bis die Anzahl von Rauschwörtern einen vorgegeben Schwellenwert übersteigt.

8. Suchverfahren unter Verwendung einer öffentlichen Suchmaschine, wobei das Verfahren die Schritte umfasst:
Empfangen der Eingabe eines gewünschten Suchworts, das aus drei oder mehr Zeichen besteht;
Entnehmen von zwei oder mehr aufeinanderfolgenden Zeichen aus dem Suchwort und Erzeugen einer Vielzahl von gültigen Zeichen-Strings, die jeweils aus den entnommenen Zeichen bestehen;
Auswählen eines beliebigen Worts aus dem Wörterbuch als Rauschwort;
Rauschzeichen-String-Erzeugungsmittel zum Entnehmen von zwei oder mehr beliebigen aufeinanderfolgenden Zeichen aus dem Rauschwort und Erzeugen eines Rauschzeichen-Strings, der von den entnommenen Zeichen gebildet wird;
Erzeugen einer Abfrage, die die gültigen Zeichen-Strings und die Rauschzeichen-Strings beinhaltet;
Übertragen der Abfrage an die öffentliche Suchmaschine;
Durchführen einer zweiten Suche über ein Suchergebnis, das von der öffentlichen Suchmaschine als Antwort auf die Abfrage übertragen wurde, wobei die zweite Suche das Suchwort zum Erzeugen eines Suchergebnisses für das Suchwort verwendet.

9. Suchverfahren gemäß Anspruch 8, das ferner die Schritte umfasst:
Übertragen vorgegebener Allgemeinwörter als Abfragen an die öffentliche Suchmaschine; und
Erzeugen des Wörterbuchs durch Entnehmen von Wörtern aus Suchergebnissen, die von der öffentlichen Suchmaschine als Antwort auf die übertragenen Abfragen zurückgegeben werden.

10. Verfahren nach Anspruch 8, wobei die Anzahl gültiger Zeichen-Strings, die erzeugt werden müssen, gemäß einer Zunahme der Zeichenanzahl in dem Suchwort erhöht wird.

11. Verfahren nach Anspruch 8, wobei die Rauschzeichen-Strings erzeugt werden, bis eine Anzahl von Rauschzeichen-Strings einen vorgegebenen Schwellenwert übersteigt.

12. Verfahren nach Anspruch 9, wobei die Rauschwörter ausgewählt werden, bis die Anzahl der Rauschwörter einen vorgegebenen Schwellenwert übersteigt.

13. Computerprogramm-Element, das Computerprogramm-Code umfasst, um einen Computer zum Ausführen der Schritte eines Verfahrens zu veranlassen, wie es in einem beliebigen Anspruch der Ansprüche 8 bis 12 beansprucht wird, wenn der Computerprogramm-Code in das Computersystem geladen und darauf ausgeführt wird.

## Revendications

1. Dispositif de recherche connectant un moteur de recherche public, le dispositif comprenant :
un moyen d'entrée de mot de recherche pour recevoir une entrée d'un mot de recherche souhaité constitué de trois ou plus caractères ;
un moyen de génération de chaîne de caractères valides pour extraire deux ou plus caractères consécutifs arbitraires du mot de recherche et générer une pluralité de chaînes de caractères valides constitués chacun des caractères ainsi extraits ;
un moyen de sélection de mot de bruit pour sélectionner un mot arbitraire dans un dictionnaire de mots comme un mot de bruit ;
un moyen de génération de chaîne de caractères de bruit pour extraire deux ou plus caractères consécutifs arbitraires du mot de bruit et générer une chaîne de caractères de bruit comprenant les caractères ainsi extraits ;
un moyen de génération de requête pour générer une requête incluant les chaînes de caractères valides et les chaînes de caractères de bruit ;
un moyen de recherche externe pour émettre la requête vers le moteur de recherche public ;
un moyen de recherche interne pour effectuer une seconde recherche sur un résultat de recherche émis par le moteur de recherche public en réponse à la requête, la seconde recherche utilisant le mot de recherche de manière à générer un résultat de recherche pour le mot de recherche.

2. Dispositif de recherche selon la revendication 1, comprenant en outre :
un moyen d'affichage de résultat de recherche pour afficher un résultat de la recherche effectuée par le moyen de recherche interne.

3. Dispositif de recherche selon la revendication 1 étant connecté à un terminal, le dispositif comprenant en outre :
un moyen de sortie de résultat de recherche pour envoyer un résultat de la recherche effectuée par le moyen de recherche interne au terminal, dans lequel se trouve le moyen d'entrée de mot de recherche pour recevoir une entrée d'un mot de recherche souhaité constitué de trois ou plus caractères provenant du terminal.

4. Dispositif de recherche selon la revendication 1, comprenant en outre :
un moyen de recherche de mot général pour émettre des mots généraux prédéterminés comme des requêtes vers le moteur de recherche public ; et
un moyen de génération de dictionnaire pour générer le dictionnaire en extrayant des mots des résultats de recherche retransmis à partir du moteur de recherche public en réponse aux requêtes émises à partir du moyen de recherche de mot général.

5. Dispositif de recherche selon la revendication 1, dans lequel le nombre de chaînes de caractères valides à générer par le moyen de génération de chaîne de caractères valides est augmenté conformément à une augmentation du nombre de caractères dans le mot de recherche entré dans le moyen d'entrée de mot de recherche.

6. Dispositif de recherche selon la revendication 1, dans lequel le moyen de génération de chaîne de caractères de bruit génère les chaînes de caractère de bruit jusqu'à ce que le nombre de chaînes de caractère de bruit excède une valeur seuil prédéterminée.

7. Dispositif de recherche selon la revendication 1, dans lequel le moyen de génération de chaîne de caractères de bruit sélectionne les mots de bruit jusqu'à ce que le nombre de mots de bruit excède une valeur seuil prédéterminée.

8. Procédé de recherche utilisant un moteur de recherche public, le procédé comprenant les étapes consistant à :
recevoir une entrée d'un mot de recherche souhaité constitué de trois ou plus caractères ;
extraire deux ou plus caractères consécutifs arbitraires du mot de recherche et générer une pluralité de chaînes de caractères valides constituées chacune des caractères ainsi extraits ;
sélectionner un mot arbitraire dans un dictionnaire de mots comme un mot de bruit ;
un moyen de génération de chaîne de caractères de bruit pour extraire deux ou plus caractères consécutifs arbitraires du mot de bruit et générer une chaîne de caractères de bruit constituée des caractères ainsi extraits ;
générer une requête incluant les chaînes de caractères valides et les chaînes de caractères de bruit ;
émettre la requête vers le moteur de recherche public ;
effectuer une seconde recherche sur un résultat de recherche émis par le moteur de recherche public en réponse à la requête, la seconde recherche utilisant le mot de recherche de manière à générer un résultat de recherche pour le mot de recherche.

9. Procédé de recherche selon la revendication 8, comprenant en outre les étapes consistant à :
émettre des mots généraux prédéterminés comme des requêtes vers le moteur de recherche public ; et
générer le dictionnaire en extrayant les mots des résultats de recherche retransmis depuis le moteur de recherche public en réponse aux requêtes transmises.

10. Procédé selon la revendication 8, dans lequel le nombre de chaînes de caractères valides à générer est augmenté conformément à une augmentation du nombre de caractères dans le mot de recherche.

11. Procédé selon la revendication 8, dans lequel les chaînes de caractères de bruit sont générées jusqu'à ce qu'un nombre de chaînes de caractères de bruit excède une valeur seuil prédéterminée.

12. Procédé selon la revendication 9, dans lequel les mots de bruit sont sélectionnés jusqu'à ce que le nombre de mots de bruit excède une valeur seuil prédéterminée.

13. Elément de programme informatique comprenant du code de programme informatique pour, quand il est chargé dans un système informatique et exécuté sur celui-ci, amener l'ordinateur à effectuer les étapes d'un procédé selon l'une quelconque des revendications 8 à 12.
